**Europäisches Patentamt**

**European Patent Office**

**Office européen des brevets**

(11) Publication number: **0 037 613**
**A1**

(12) **EUROPEAN PATENT APPLICATION**

(21) Application number: **81200375.4**

(22) Date of filing: **02.04.81**

(51) Int. Cl.³: **B 65 G 47/90**

(30) Priority: **08.04.80 NL 8002048**

(43) Date of publication of application:
**14.10.81 Bulletin 81/41**

(84) Designated Contracting States:
**AT BE CH DE FR GB IT LI NL**

(71) Applicant: **REDLAND-BRAAS-BREDERO EUROPA
(R.B.B.) B.V.**
**Postbox 74**
**NL-3500 AB Utrecht(NL)**

(84) Designated Contracting States:
**BE FR NL**

(71) Applicant: **BRAAS & CO. GMBH**
**Friedrich-Ebert-Anlage 56**
**D-6000 Frankfurt 97(DE)**

(84) Designated Contracting States:
**CH DE IT LI AT**

(71) Applicant: **REDLAND TILES LIMITED**
**Redland House Castle Gate**
**Rigate Surrey RH2 OSJ(GB)**

(84) Designated Contracting States:
**GB**

(72) Inventor: **van de Boogaard, Hendricus W.**
**Lodewijkstraat 20**
**NL-3417 VE Montfoort(NL)**

(74) Representative: **van der Beek, George Frans et al,**
**Nederlandsch Octrooibureau Johan de Wittlaan 15 P.O.**
**Box 29720**
**NL-2502 LS Den Haag(NL)**

(54) Conveying device for a stack of rooftiles from concrete.

㉞ Device for conveying a stack of rooftiles from a stacking station (3) into a transport and/or packing station (4), provided with a gripping device (8) which is connected with a supporting arm (6), rotatable around a horizontal shaft (7) for conveying the stack from the vertical position in the stacking station (3) into the horizontal or inclining position in the transport and/or packing station (4).

./...

Croydon Printing Company Ltd.

fig-2

1

Conveying device for a stack of rooftiles from concrete.

---------------

The present invention relates to a device for conveying a stack of rooftiles from a stacking station, consisting of a body rotatable stepwise around a vertical shaft and provided with receiving chambers for stacked rooftiles, protruding freely out of the circumference of the body with a part of their length, into a transport and/or packing station where the stack of the rooftiles is set down standing on one side, said conveying device is provided with a displaceable gripping device, gripping the stack of rooftiles in a stacking station at the edges of the rooftiles protruding out of the body and adapted to convey the stack from a substantially vertical position to a substantially horizontal or inclining position in the transport and/or packing station.

Such a device is known from the German patent 1,756,342.

In manufacturing concrete rooftiles the rooftiles come from the production line in a stacking station. During stacking the body stands still. A support for a stack in a receiving chamber moves stepwise downwards, until the receiving chamber is filled up. Then the body is rotated until a subsequent receiving chamber is lined up with the production line. Thus all of receiving chambers are filled with rooftiles.

The rooftiles are manufactured in the production line such that the lower edge of the rooftiles lies in front. This means that in stacking said lower edges lie the nearest to the center of the stacking station.

From the stacking station the stacks are taken up from the receiving chamber and conveyed to a transport and/or packing station.

The known conveying device positions each stack on a horizontal or inclining underground such that the lower edges of the rooftiles are directed downwards. By the shape of the gripping device this' cannot be done else, because the gripping device grips around the stack from the outside.

Now, when the stack of rooftiles are enclosed by a packing foil, as usually now, a condensate is formed in the packing during storage. Said water of condensation accumulates underneath the packing near the lower edges of the rooftiles being visible on the roof. Said water of condensation causes lime deposition upon the visible lower edges of the rooftiles.

Consequently, in practice it is usual to reverse the stack before packing which means an additional operation.

The invention objects to provide for a conveying device in which said reversing is superfluous and which further, is also implemented more simple than the known device.

According the invention this is achieved by giving the gripping device a flat U-shaped configuration the parallel legs of which are provided with clamping means engageable on the edges of the stack and the bottom of which lies below the stack, said gripping device is connected to a supporting arm rotatable around substantially horizontal shaft for conveying the stack from the vertical position in the stacking station into a horizontal or inclining position in the transport and/or packing station.

By the flat U-shaped configuration of the gripping device the stack may be laid down in the transport and/or packing station such that the lower edges of the rooftiles come at the upperside.

The invention will be explained by reference to a drawing for an embodiment, in which:

Fig. 1 schematically shows a top view of the end of the production line, the stacking station and a part of the conveying device according to the invention;

Fig. 2 schematically shows a side view of the stacking station, the conveying device according to the invention and the packing station; and

Fig. 3 and 4 show perspectiveviews of the conveying device according to the invention in both of the end positions.

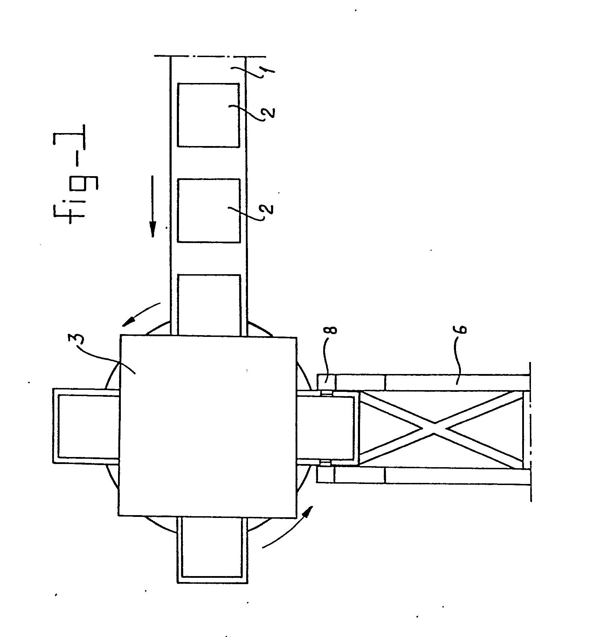

The end of the production line is referenced by 1 in fig. 1. Thereon cured concrete rooftiles 2 move with their edges in front lying underneath of a roof. Thus said lower edges are always visible on a roof. The production process is arranged such that the lower edges are directed to the front.

The rooftiles 2 come into a known stacking station, consisting of a body 3, rotatable stepwise around a vertical shaft.

Said body 3 comprises four receiving chambers, in which supporting means are provided for a stack. When the first rooftile 2 lies upon the supporting means, it moves a step downwards, so that the second rooftile comes to lie on the first one and so on, until the stack of the desired height is formed. The body 3 rotates by $90^{\circ}$, such that a subsequent receiving chamber may be filled from the production line 1.

Dependent upon the arrangement of the conveying device according to the invention one of the formed stacks is taken from the stacking station and conveyed to a horizontal or inclining underground, the so-called packing station, referred by 4.

For example, here the stack is enclosed with a foil (not illustrated).

All this belongs to the prior art.

In the known conveying device both of the parallel gripping arms are connected with each other by a bridge, gripping around the stack.

Said known gripping device can only lay down the stack onto the underground of the packing station 4, such that the lower edges of the tiles seat on the underground.

After providing a packing foil, during the storage water of condensation may be established accumulating beneath the packing foil and which may give rise to lime deposition onto the lower edges of the rooftiles.

In order to avoid this therefore, one should reverse the stack before or after packing.

The conveying device according to the invention is in fact extremely simple in construction and moreover, makes superfluous the aditional reversement of the stack.

The conveying device is arranged stationary and consists of a basic frame 5, as well as a gripping construction 6, movable around

4

a horizontal shaft 7 with respect to the basic frame 5.

The gripping portion of the gripping construction 6 consist of two parallel gripping arms 8 being connected at one end by a cross connection 9, thus a U-shaped gripping portion.

The confronting sides of the gripping arms 8 may be provided with clamping means, known per se such as inflatable hoses or the like, by means of which the stack may be clamped.

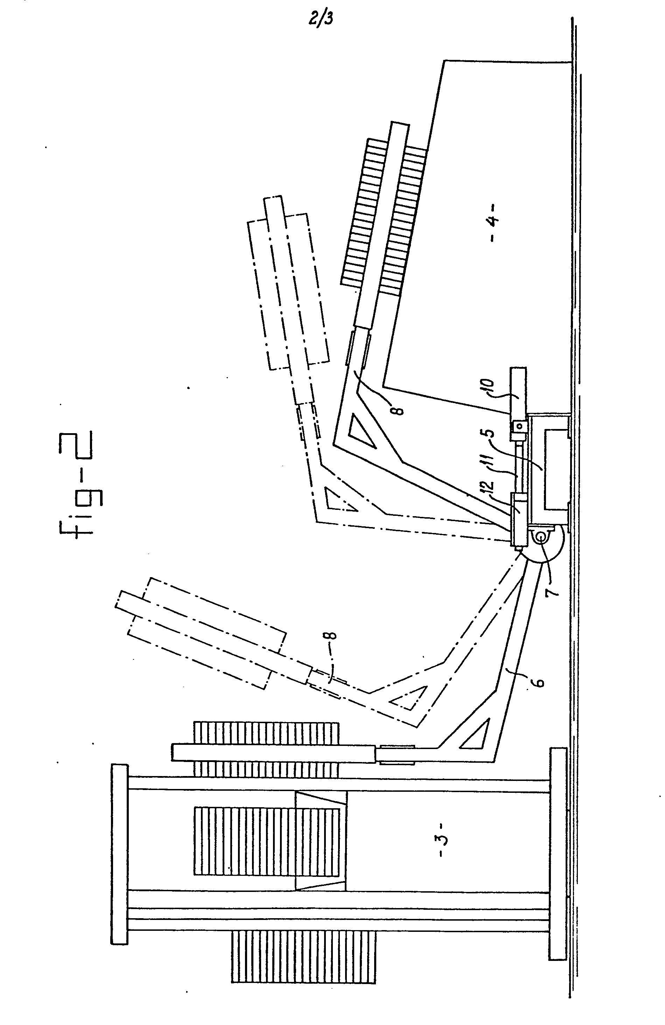

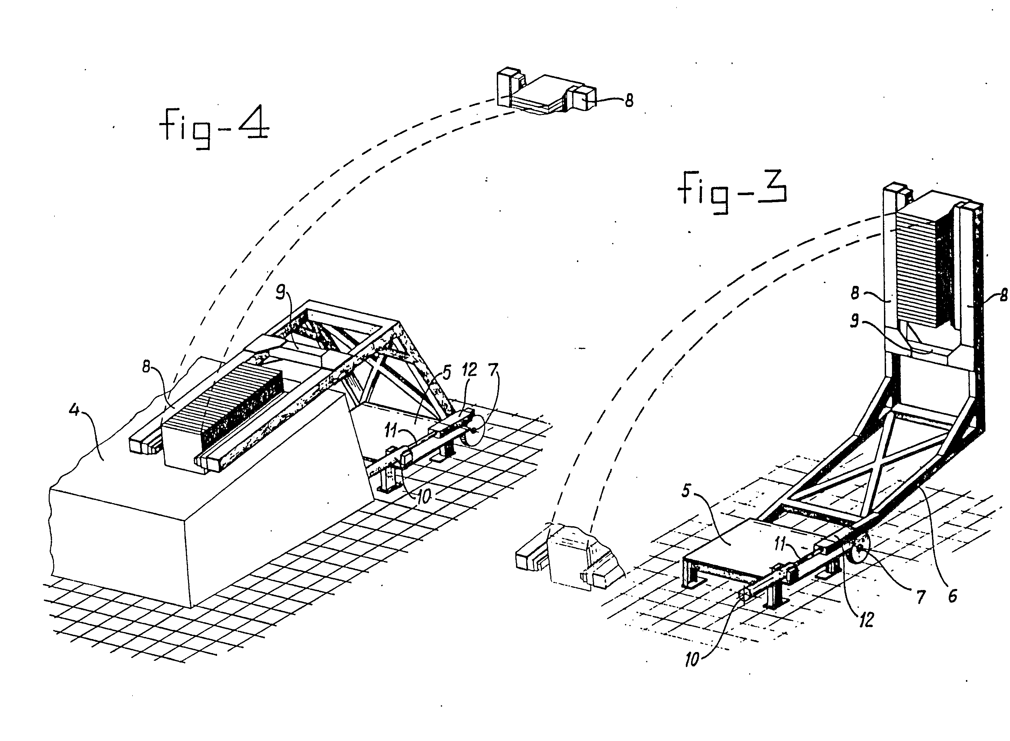

The operation appears simply from the figures 2, 3 and 4.

Because the gripping arms 8 are connected to each other only below the stack, the stack is automatically laid down onto the packing station 4, such that the lower edges of the rooftiles 2 lie at the upperside.

The gripping construction 6 may be turned around the shaft 7, by means of all types of known means, for example by means of a hydraulic cylinder 10, having a plunger rod 11, being implemented at its one end as a gear rack 12, which may cooperate with a (not shown) tooth section, fixed to the gripping construction 6.

It is obvious that different driving means are useful.

5

# C L A I M S

1. Device for conveying a stack of rooftiles from a stacking station, consisting of a body rotatable stepwise around a vertical shaft and provided with receiving chambers for stacked rooftiles, protruding freely out of the circumference of the body with a part of their length, into a transport and/or packing station, where the stack of rooftiles is set down standing on one side, said conveying device is provided with a displaceable gripping device, which may grip the stack of rooftiles in the stacking station at the edges of the rooftiles protruding out of the body and which may convey the stack from a substantially vertical position to a substantially horizontal or inclining position in the transport and/or packing station, c h a r a c t e r i s e d in that the gripping device has a flat U-shaped configuration, the parallel legs of which are provided with clamping means which may grip on the edges of the stack and the bottom of which lies below the stack, said gripping device is connected with a supporting arm, rotatable around a substantially horizontal shaft for conveying the stack from the vertical position in the stacking station into the horizontal or inclining position in the transport and/or packing station.

2. Device according to claim 1, c h a r a c t e r i s e d in that the substantially horizontal shaft is supported in a stationary basic frame.

3. Device according to claim 1 or 2, c h a r a c t e r i s e d in that driving means cooperate with the supporting arm for turning it around the substantailly horizontal shaft.

-------------

0037613

fig-1

# fig-2

fig-4

fig-3

0037613

0037613

European Patent
Office

EUROPEAN SEARCH REPORT

Application number
EP 81 20 0375

| Category | DOCUMENTS CONSIDERED TO BE RELEVANT | | CLASSIFICATION OF THE APPLICATION (Int Cl.³) |
|---|---|---|---|
| | Citation of document with indication, where appropriate, of relevant passages | Relevant to claim | |
| | DE - B - 1 290 484 (BAUER)<br>* Column 2, lines 3-19; figures * | 1,2 | B 65 G 47/90 |
| | FR - A - 1 514 771 (HENKE)<br>* Page 1, column 2, lines 34-39; page 2, column 1; page 2, column 2, lines 1-6; figure 1 * | 1-3 | |
| DA | DE - A - 1 756 342 (SCHADE)<br>* Page 6, lines 22-27; pages 7,8; figures 1,2 * | 1 | TECHNICAL FIELDS SEARCHED (Int. Cl.³)<br><br>B 65 G<br>B 66 C |

CATEGORY OF
CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search<br>The Hague | Date of completion of the search<br>06-07-1981 | Examiner<br>OSTIJN |
|---|---|---|